(19) Europäisches Patentamt
European Patent Office
Office européen des brevets

(11) **EP 3 456 524 A1**

(12) **EUROPEAN PATENT APPLICATION**
published in accordance with Art. 153(4) EPC

(43) Date of publication:
**20.03.2019 Bulletin 2019/12**

(51) Int Cl.:
*B29C 70/10* (2006.01)          *A63B 53/10* (2015.01)
*B32B 1/08* (2006.01)           *G06F 17/50* (2006.01)

(21) Application number: **17796256.0**

(22) Date of filing: **12.05.2017**

(86) International application number:
**PCT/JP2017/018087**

(87) International publication number:
**WO 2017/195898 (16.11.2017 Gazette 2017/46)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **13.05.2016 JP 2016097268**

(71) Applicant: **Mitsubishi Chemical Corporation Tokyo 100-8251 (JP)**

(72) Inventors:
• **SHIMONO Satoshi**
  **Tokyo 100-8251 (JP)**
• **SUZUKI Katsuyuki**
  **Kashiwa-shi**
  **Chiba 277-8568 (JP)**

(74) Representative: **Hoffmann Eitle Patent- und Rechtsanwälte PartmbB Arabellastraße 30 81925 München (DE)**

(54) **TUBULAR BODY DESIGNING METHOD, GOLF SHAFT DESIGNING METHOD, AND GOLF SHAFT**

(57)     A tubular body designing method includes: an analysis step of calculating a plurality of objective functions of a tubular body, which is to be formed of a plurality of fiber-reinforced resin layers laminated together, by repeatedly performing calculation according to a discrete method using a lamination model while successively changing a value of a design variable of the tubular body; and a search step of searching for a value of the design variable where a maximum value or a minimum value is obtained from the calculated plurality of objective functions.

FIG. 2

**Description**

TECHNICAL FIELD

The present invention relates to a tubular body designing method, a golf club shaft designing method, and a golf club shaft.

Priority is claimed on Japanese Patent Application No. 2016-097268, filed on May 13, 2016, the content of which is incorporated herein by reference.

BACKGROUND ART

From January 01, 2008, a high-resilience club became unsuitable for a golf rule due to the regulation of Public Interest Incorporated Foundation Japan Golf Association (JGA). In this rule, the coefficient of restitution (COR) of a club face should be 0.830 or less. Accordingly, since it is difficult to increase a flight distance by a head alone, a manufacturer of a golf club focuses on a golf club shaft. Examples of means for increasing a flight distance by a golf club shaft include a reduction in weight. However, in consideration of a current situation, it is uncertain if the lightest laminated structure is actually designed since the design of a golf club shaft is made by the repetition of trial-and-error. Further, time and costs are also required to make prototypes due to trial-and-error. Even if time and a budget required to make prototypes are sufficient, it is impossible to make all combinations of prototypes realistically. This is a common problem not only for a golf club shaft but also for sporting members, such as a fishing rod, a frame of a bicycle, and a tennis racket, and industrial members, such as a robot arm, a carbon roll, and a drive shaft.

A method, which uses simulation and optimization calculation to reduce time and costs required to make prototypes, has been proposed in the past.

For example, a technical field disclosed in Patent Literature 1 relates to a method of designing and manufacturing method of a golf club shaft, and an analysis using a discrete method and an optimization calculation, wherein a design parameters of a golf club shaft are represented as a function, are performed. Further, a technique disclosed in Patent Literature 2 also relates to a golf club shaft, and the performance of a golf club shaft is optimized by focusing on a change in a swing motion when using different golf equipments.

Further, there exist techniques disclosed in Patent Literature 3 and Patent Literature 4 in regard to a field other than a golf club shaft. The technique disclosed in Patent Literature 3 is to determine the physical property of a resin by global optimization. The technique disclosed in Patent Literature 4 relates to a hybrid material of a fiber-reinforced resin and metal. The technique disclosed in Patent Literature 4 is a method of modeling each layer as a laminated shell element and optimizing the parameter of an adhesive layer serving as an interface since the adhesive layer provided between a fiber-reinforced resin layer and metal considerably contribute to the expression of strength.

CITATION LIST

PATENT LITERATURE

Patent Literature 1: JP 2008-302017 A
Patent Literature 2: JP 2011-000425 A
Patent Literature 3: WO 2013/042600 A
Patent Literature 4: JP 2003-94559 A

SUMMARY OF THE INVENTION

PROBLEM TO BE SOLVED BY THE INVENTION

However, in the technique disclosed in Patent Literature 1, the value of the optimum bending stiffness of the golf club shaft can be found out but a specific laminated structure for achieving the optimum bending stiffness cannot be found out. Likewise, even in the technique disclosed in Patent Literature 2, the optimum performance of the golf club shaft can be found out but a specific laminated structure cannot be found out. In the technique disclosed in Patent Literature 3, the optimum performance of a resin can be found out but a specific components cannot be found out as in Patent Literatures 1 and 2. In the technique disclosed in Patent Literature 4, the parameter of the interface can be found out but the optimum structure of the fiber-reinforced resin layer cannot be found out. As stated above, in the techniques disclosed in Patent Literatures 1 to 4, the laminated structure of a tubular body formed by a plurality of fiber-reinforced resin layer cannot be found out as described above.

An aspect of the invention has been made in consideration of the above-mentioned problems, and an object of the aspect of the invention is to provide a tubular body designing method and a golf club shaft designing method that can design an optimum laminated structure in accordance with the intended use. Further, an object of the aspect of the invention is to provide a golf club shaft as an example of a tubular body.

MEANS FOR SOLVING PROBLEM

[1] In order to achieve the object, a tubular body designing method according to an aspect of the invention includes: an analysis step of calculating a plurality of objective functions of a tubular body, which is to be formed of a plurality of fiber-reinforced resin layers laminated together, by repeatedly performing calculation according to a discrete method using a lamination model while successively changing a value of a design variable of the tubular body; and a search step of searching for a value of the design variable where a maximum value or a minimum value is obtained from the calculated plurality of objective functions.

[2] In the aspect of [1], the objective functions may be formed of a plurality of variables.

[3] In the aspect of [1] or [2], the discrete method may be at least one of a finite element method, a boundary element method, a distinct element method, an element-free Galerkin (EFG) method, an extended FEM (XFEM) method, a smoothed particle hydrodynamics (SPH) method, and a capsular particle method, the objective function may be any one of strength, weight, bending stiffness, and torsional stiffness of the tubular body or is represented by a plurality of linear combinations; and the search step may select at least one of a lamination angle of each laminated layer, a material constant, and a pipe shape of the tubular body as the design variable.

[4] In any one aspect of [1] to [3], at least one of the plurality of laminated layers of the tubular body may include two or more regions, the analysis step may calculate the plurality of objective functions for each region of the layer, and the search step may search for a value of the design variable for each region of the layer.

[5] In any one aspect of [1] to [4], the analysis step may further include a sampling step of discretely selecting the lamination angles of the layers that are the design variables; the analysis step may calculate the plurality of objective functions, using the lamination angles of the layers, selected by the sampling step as the successively changed design variables; the search step may include a response surface creation step of creating a response surface that is calculated so as to approximate the plurality of objective functions calculated by the analysis step; and the search step may search for a value of the design variable, which allows the objective function to take a maximum value or a minimum value in the response surface created by the response surface creation step.

[6] In the aspect of [5], the sampling step may perform sampling for expanding a sampling space to a repeated infinite space and maximizing a minimum value of a distance between sampling points.

[7] In the aspect of [5] or [6], the response surface creation step may create the response surface by Fourier series approximation.

[8] In the aspect of [7], the Fourier series approximation may be primary approximation or secondary approximation.

[9] In order to achieve the object, there is provided a golf club shaft designing method according to an aspect of the invention in which the tubular body is a golf club shaft and the golf club shaft is designed by any one aspect of [1] to [8].

[10] In order to achieve the object, there is provided a golf club shaft according to an aspect of the invention in which a vertical laminated component, which is the sum of lamination angles of the respective layers except for two angle layers of the innermost layers, is reduced toward a tip side from a bat side.

[11] In the aspect of [10], at least one layer may be formed of a plurality of prepregs having changed lamination angles.

[12] In the aspect of [10] or [11], in a case in which a range of 0 mm or more and less than 325 mm from an end portion of a bat as a datum is defined as the vicinity of a position C, a range of 325 mm or more and less than 625 mm is defined as the vicinity of a position B, a range of 625 mm to 975 mm is defined as the vicinity of a position A, and a range between 975 mm and a tip is defined as the vicinity of a position T, 1) to 4) may be satisfied,

1) A vertical laminated component in the vicinity of the position C is 195 or more and smaller than 225,
2) A vertical laminated component in the vicinity of the position B is 185 or more and is smaller than the vertical laminated component obtained at the point C,
3) A vertical laminated component in the vicinity of the position A is 90 or more and smaller than 180, and
4) A vertical laminated component in the vicinity of the position T is 0.

[13] In any one aspect of [10] to [12], lamination angles in the vicinity of the position C may be +45°, -45°, 0°, 0°, 90°, 15° to 45°, and 90° in this order from the inside of the tubular body; lamination angles in the vicinity of the position B may be +45°, -45°, 0°, 0°, 90°, 5° to 15°, and 90° in this order from the inside of the tubular body; lamination angles in the vicinity of the position A may be +45°, -45°, 0°, 0°, 0°, 0°, and 90° in this order from the inside of the tubular body; and lamination angles in the vicinity of the position T may be +45°, -45°, 0°, 0°, 0°, 0°, and 0° in this order from the inside of the tubular body.

[14] In the aspect of [10] or [11], lamination angles in the vicinity of the position C may be +45°, -45°, 0°, 0°, 90°, +15° to 45°, -15° to -45°, and 90° in this order from the inside of the tubular body; lamination angles in the vicinity of the position B may be +45°, -45°, 0°, 0°, 90°, -5° to -15°, +5° to +15°, and 90° in this order from the inside of the tubular body; lamination angles in the vicinity of the position A may be +45°, -45°, 0°, 0°, 0°, 0°, and 90° in this order from the inside of the tubular body; and lamination angles in the vicinity of the position T may be +45°, -45°, 0°, 0°, 0°, 0°, and 0° in this order from the inside of the tubular body.

EFFECT OF THE INVENTION

According to the invention, in a case in which a desired physical property is selected as a objective function, the physical property and the structure of a material are input to the objective function as design variables, and calculation is then repeatedly performed while successively changing the design variables, the structure of a material, which satisfies a desired physical property, can be obtained as an optimum solution. Specifically, in a tubular body formed of a plurality of fiber-reinforced resin layers, the optimum laminated structure of each layer can be designed in accordance with the intended use. Particularly, the invention can be applied to reduce weight and increase strength, and can solve the problems peculiar to a tubular body formed of a plurality of fiber-reinforced resin layers. Further, a tublar body with light weight and high stiffness, which has not been provided in the related art, is obtained in the above-mentioned application example.

BRIEF DESCRIPTION OF DRAWINGS

Fig. 1 is a block diagram of a design device according to an embodiment.
Fig. 2 is a flowchart of design processing according to Example.
Fig. 3 is a diagram illustrating a laminated shell-element model that is used for an analysis using a discrete method according to Example.
Fig. 4 is a diagram illustrating a three-point bending test of SG standard CPSA0098.
Fig. 5 is a diagram illustrating a model based on a three-point bending test according to Example.
Fig. 6 is a flowchart of design processing according to Example.
Fig. 7 is a diagram illustrating a sampling procedure according to Example.
Fig. 8 is a diagram illustrating an example of a response surface based on three-point bending strength that is calculated using sampling points of a sixth layer and a seventh layer according to Example.
Fig. 9 is a schematic sampling diagram in the case of five sampling points according to Example.
Fig. 10 is a diagram illustrating a response surface that is subjected to primary Fourier series approximation according to Example.
Fig. 11 is a diagram illustrating a response surface that is subjected to secondary Fourier series approximation according to Example.
Fig. 12 is a diagram illustrating an example of an optimum structure at a position C in a case in which constraint conditions according to Example are imposed.
Fig. 13 is a diagram illustrating examples of optimum structures at positions B, A, and T in a case in which constraint conditions according to Example are imposed.
Fig. 14 is a diagram illustrating an example of the structure of an optimum lamination of a golf club shaft which is obtained using a method of this embodiment and of which the strength is maximized.

MODES FOR CARRYING OUT THE INVENTION

An embodiment of the invention will be described below with reference to the drawings.
A golf club shaft will be described as an example of a tubular body formed of a plurality of layers (for example, fiber-reinforced resin layers) in this embodiment, but is not limited thereto. This embodiment can be applied to a tubular body, which is formed of a plurality of fiber-reinforced resin layers, for sporting members, such as a fishing rod, a frame of a bicycle, and a tennis racket, and industrial members, such as a robot arm, a carbon roll, and a drive shaft.

<Configuration of Design Device 1>

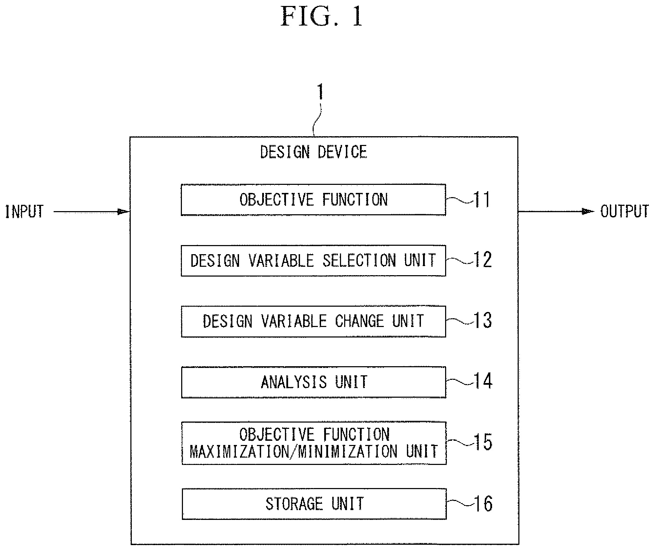

Fig. 1 is a block diagram of a design device 1 according to an embodiment. As illustrated in Fig. 1, the design device 1 includes a objective function selection unit 11, a design variable selection unit 12, a design variable change unit 13, an analysis unit 14, a objective function maximization/minimization unit 15, and a storage unit 16.

The design device 1 designs a golf club shaft, which is a tubular body to be formed of a plurality of fiber-reinforced resin layers laminated together, by using input information, which is input to the design device 1 by a user (a designer, a manufacturer, or the like), and outputs designed information to an external device, such as a display unit or a printer. Here, the input information is information about objective functions and design variables. Further, the information to be output is, for example, the number of layers to be laminated, information about a material, a lamination angle (referred to as an orientation angle), weight, and strength of each layer, and the like. Note that the design device 1 may store several pieces of information among the information about the objective functions and the design variables in the storage unit 16 in advance. The objective functions and the design variables will be described later.

Note that a part of the design device 1 or the entire design device 1 may be embodied in a personal computer and software installed in the personal computer.

The objective function selection unit 11 selects at least one objective function from the information that is stored in the storage unit 16 or the input information that is input. Here, the objective function is, for example, the strength of the golf club shaft, the weight of the golf club shaft, the bending stiffness of the golf club shaft, the torsional stiffness of the golf club shaft, three-point bending strength, or the like. Note that the objective function selection unit 11 may select a plurality of objective functions. Further, the objective function may be information that represents the linear combination of the selected plurality of objective functions or information that represents the linear combination of a plurality of objective functions. The objective function selection unit 11 outputs the selected objective function to the analysis unit 14.

The design variable selection unit 12 selects at least one design variable from the information that is stored in the storage unit 16 or the input information that is input. Here, the design variable is information required to design the golf club shaft, which is a tubular body, and is the laminated structure of the golf club shaft, the material constant of the golf club shaft, the lamination angle of each layer of the golf club shaft, the diameter of each portion of the golf club shaft, the thickness of each portion of the golf club shaft, or the like. Note that the design variable selection unit 12 may also select a plurality of design variables. Further, the design variable selection unit 12 may be adapted to output unselected variables to the analysis unit 14 as arbitrary fixed values. The arbitrary fixed values may be stored in, for example, the storage unit 16. For example, assume that the design variable selection unit 12 selects only the lamination angle as the design variable, and does not select the material constant, the diameter, and the thickness. In this case, the design variable selection unit 12 sets the material constant, the diameter, and the thickness, which are generally used for the golf club shaft, to fixed values, and the analysis unit 14 may be adapted to make an analysis of, for example, an average physical property and the like of all golf club shafts by using these fixed values. Further, in a case in which an object is to maximize the strength of a light weight golf club shaft, the design variable selection unit 12 may set the physical property of a material that is used for the light weight golf club shaft as the population.

The design variable change unit 13 successively changes the design variable that is selected by the design variable selection unit 12. In a case in which, for example, the lamination angle is selected as the design variable, the design variable change unit 13 changes the lamination angle by a predetermined angle (for example, 45°) in increment. The design variable change unit 13 outputs the changed design variables to the analysis unit 14. For the making of the golf club shaft that is a tubular body, the design variable change unit 13 changes, for example, the lamination angle of each of a plurality of fiber-reinforced resin layers to laminate the plurality of fiber-reinforced resin layers. Note that, in a case in which a direction where a material is to be laminated is changed, a Young's modulus is changed according to the lamination angle. The design variable change unit 13 calculates Young's modulus, which corresponds to each lamination angle, by a well-known method. Further, it is preferable that the design variable change unit 13 efficiently changes the design variable as much as possible by an experimental design method, mathematical programming, or the like to reduce calculation time in a case in which the design variable change unit 13 is to change the design variable.

The analysis unit 14 makes an analysis according to a discrete method by using the objective function selected by the objective function selection unit 11, the design variables successively changed by the design variable change unit 13, and a laminated shell-element model.

The discrete method is at least one selected from the method exemplified below: of a finite element method, a boundary element method, a distinct element method, an element-free Galerkin (EFG) method, an extended FEM (XFEM) method, a smoothed particle hydrodynamics (SPH) method, and a capsular particle method (CPM). Since a finite element method is generally spread and is highly reliable, it is preferable that a finite element method is used. The analysis unit 14 makes an analysis by using, for example, structural analysis software. The structural analysis software is, for example, LS-DYNA (registered trademark) manufactured by Livermore Software Technology Corporation. For example, the analysis unit 14 sets time evolution to a dynamic explicit method, sets an analysis solver to non-linear behavior analysis, and sets a discrete method to a finite element method in the solution setting of LS-DYNA (registered trademark). Further, the analysis unit 14 sets an element form to a thick shell element, sets an element formulation to a two-dimensional plane stress element, and set hourglass control to a viscous type in the element setting of LS-DYNA (registered trademark). Note that the above-mentioned example is an example, and the analysis unit 14 may use other settings. The laminated shell-element model will be described later.

The objective function maximization/minimization unit 15 obtains an optimum point by searching for the maximum value or the minimum value of the objective function in the result of the analysis of the analysis unit 14. The objective function maximization/minimization unit 15 searches for the maximum value in cases in which the objective function is, for example, the strength of the golf club shaft, the bending stiffness of the golf club shaft, and the torsional stiffness of the golf club shaft, and searches for the minimum value in a case in which the objective function is, for example, the weight of the golf club shaft. Since results of strength tests using actual specimens have a large deviation, it is useful to obtain theoretical solutions from a simulations. Therefore, the selection of strength as the objective function is meaningful. Note that the objective function maximization/minimization unit 15 may be adapted to search for a local maximum value or a local minimum value. Further, the objective function maximization/minimization unit 15 uses, for example, a simulated annealing method or the like for maximization or minimization. Here, a simulated annealing method is a general-purpose randomized algorithm against a problem about global optimization, and provides good approximation to the global optimum solution of a function that is given to the inside of a broad search space. Note that the objective function maximization/minimization unit 15 may be adapted to perform maximization or minimization by using a method other than a simulated annealing method. The objective function maximization/minimization unit 15 may be adapted to create a response surface with, for example, a radial basis function (RBF) by using, for example, the result of the analysis held by the analysis unit 14. Further, the objective function maximization/minimization unit 15 may calculate the approximation function of a solution space by using the created response surface, and may deduce only the optimum point by using various optimization methods, such as a maximum gradient method and dynamic programming.

The storage unit 16 stores several pieces of information among the information about the objective functions and the design variables in advance.

Example 1

An example of design processing procedure of Example 1 will be described.

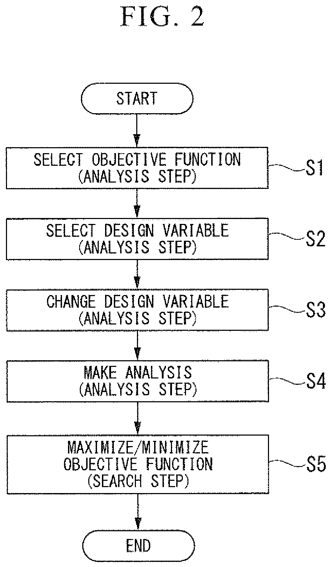

Fig. 2 is a flowchart of design processing according to Example.

(Step S1) The objective function selection unit 11 selects at least one objective function from the information that is stored in the storage unit 16 or the input information that is input (objective function selection step, analysis step).

(Step S2) The design variable selection unit 12 selects at least one design variable from the information that is stored in the storage unit 16 or the input information that is input (design variable selection step, analysis step).

(Step S3) The design variable change unit 13 successively changes the design variable that is selected by the design variable selection unit 12 (design variable change step, analysis step).

(Step S4) The analysis unit 14 makes an analysis with, for example, a finite element method by using a laminated shell-element model (analysis step).

(Step S5) The objective function maximization/minimization unit 15 obtains an optimum point by searching for the maximum value or the minimum value of the objective function that is selected in Step S1 by the objective function selection unit 11 (objective function maximization/minimization step, search step).

Next, an example of the laminated shell-element model, which is used for an analysis using the discrete method, will be described.

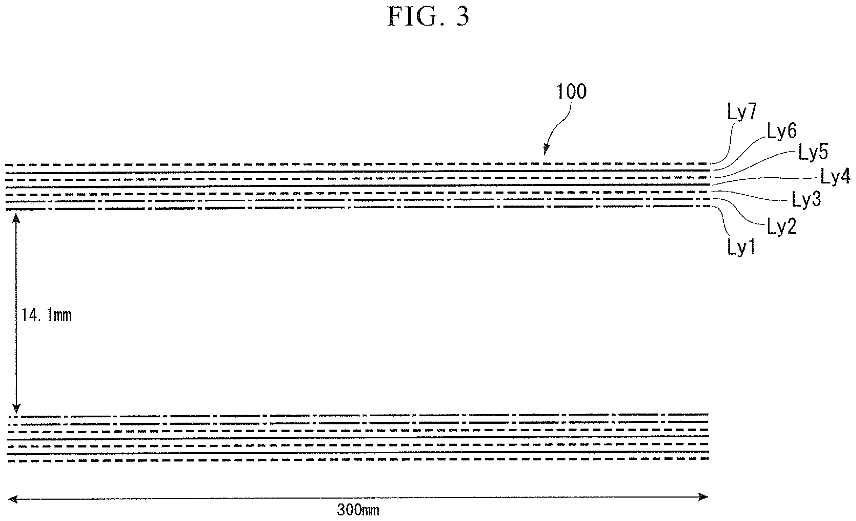

Fig. 3 is a diagram illustrating the laminated shell-element model that is used for an analysis using a discrete method according to Example. Note that the half sectional view of the laminated shell-element model is illustrated in Fig. 3.

As illustrated in Fig. 3, the laminated shell-element model 100 has an inner diameter of 14.1 [mm] and a length of 300 [mm], and has a structure in which seven layers formed of fiber-reinforced resin layers, that is, first to seventh layers Ly1 to Ly7 are laminated and the lamination angle of each layer is 0° (degree) (a direction where fiber is oriented to the longitudinal direction).

Further, the laminated shell-element model is defined as a model in which a finite number of elements are connected to each other at nodal points to substantially form the shape of a rod. Further, each element includes, for example, parameters, such as the length, bending modulus of elasticity, Young's modulus E, and the second moment of area I of the element.

Next, one example of information about a material stored in the storage unit 16 or information about a material to be input to the design device 1 will be described.

Table 1 shows one example of information about a material stored in the storage unit 16 or information about a material to be input to the design device 1.

[Table 1]

| Prepreg | Product number | Tensile modulus of elasticity of fiber [GPa] | Basis weight [g/m$^2$] | Resin content [mass%] | Thickness [mm] |
|---|---|---|---|---|---|
| A | TR350C050S (manufactured by Mitsubishi Rayon Co., Ltd.) | 235 | 75 | 25 | 0.062 |
| B | MR350C050S (manufactured by Mitsubishi Rayon Co., Ltd.) | 295 | 75 | 25 | 0.062 |
| C | MRX350K020S (manufactured by Mitsubishi Rayon Co., Ltd.) | 295 | 24 | 40 | 0.026 |
| D | MRX350C050S (manufactured by Mitsubishi Rayon Co., Ltd.) | 295 | 75 | 25 | 0.062 |
| E | MRA350C050S (manufactured by Mitsubishi Rayon Co., Ltd.) | 325 | 75 | 25 | 0.062 |
| F | HRX350C050S (manufactured by Mitsubishi Rayon Co., Ltd.) | 390 | 75 | 25 | 0.062 |
| G | HSX350C050S (manufactured by Mitsubishi Rayon Co., Ltd.) | 450 | 75 | 25 | 0.062 |
| H | HyEJ060M50D (manufactured by Mitsubishi Rayon Co., Ltd.) | 587 | 75 | 25 | 0.062 |
| I | HyEJ080M50D (manufactured by Mitsubishi Rayon Co., Ltd.) | 783 | 75 | 25 | 0.062 |

In an example shown in Table 1, information about prepregs A to I that are sheet-like members in which a resin and the like are impregnated into fiber is stored in the storage unit 16. The storage unit 16 stores a product number, the tensile modulus of elasticity [GPa] of fiber, a basis weight [g/m$^2$], a resin content [mass%], and a thickness [mm] in association with the prepreg ($\chi$) ($\chi$ is any one of A to I). For example, the storage unit 16 stores a product number of TR350C050S, a tensile modulus of elasticity of fiber of 235 [GPa], a basis weight of 75 [g/m$^2$], a resin content of 25 [mass%], and a thickness of 0.062 [mm] in association with the prepreg A. Here, a basis weight is a weight per unit area. Note that in Table 1, the other prepregs except for the prepreg C are adjusted in consideration of the subsequent analysis so as to have the same basis weight, the same resin content, and the same thickness except for the elastic modulus of fiber.

Note that the example shown in Table 1 is one example, and the storage unit 16 may also store information about the materials of other product numbers and materials having thicknesses other than 0.062 [mm].

Here, an example of calculation, which is performed by the design device 1, will be described with reference to Fig. 2.

The objective function selection unit 11 selects the bending stiffness of a golf club shaft from information that is stored in the storage unit 16 (Step S1). Subsequently, the design variable selection unit 12 selects the type of a prepreg from the information that is stored in the storage unit 16 (Step S2). Then, the design variable change unit 13 changes the type of a lamination angle prepreg for each layer to laminate a plurality of fiber-reinforced resin layers (Step S3). The analysis unit 14 makes an analysis with, for example, a finite element method by using a laminated shell-element model (Step S4). The objective function maximization/minimization unit 15 obtains an optimum point by searching for the maximum value of stiffness, which is a objective function, in the result of the analysis of Step S4 (Step S5).

As a result, a material close to the optimum point is the prepreg I (Table 1).

Example 2

Next, Example 2 will be described.

Generally, a fiber-reinforced resin layer becomes brittle as the stiffness of a fiber-reinforced resin layer becomes high. For this reason, it is necessary to consider not only the modulus of elasticity but also strength. Particularly, since a golf club shaft is crushed in the circumferential direction, in a case in which the golf club shaft is formed of only 0°-layers, there is a case in which the strength of the golf club shaft is significantly reduced. In this case, the strength of the golf club shaft can be increased by a change in a lamination angle. For this purpose, an example in which three-point bending strength is selected as a objective function to consider such a problem about strength and a lamination angle is selected as a design variable will be described in Example 2.

Here, the outline of "Strength of C-type golf club shaft (1) three-point bending test" disclosed in SG standard CPSA0098, the accreditation criteria of a golf club shaft, and a method of confirming the criteria (Consumer Product Safety Association, 2087th, Approval 5 of Secretary of State for Trade and Industry, October 4, 1993) will be described. Here, the C-type golf club shaft is a golf club shaft that is made of non-metal, such as fiber-reinforced plastics.

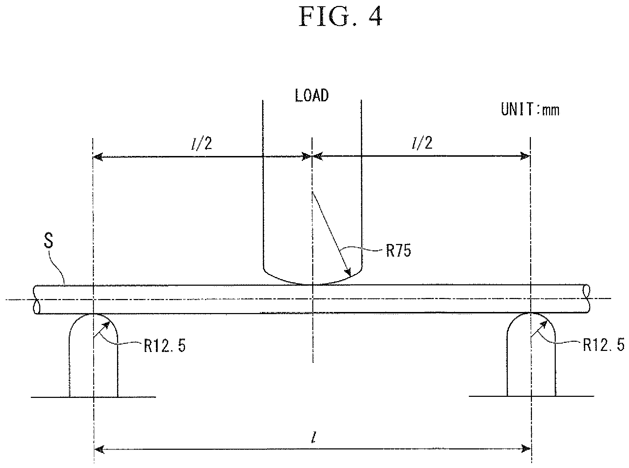

Fig. 4 is a diagram illustrating a three-point bending test of SG standard CPSA0098. Here, a position T is a position that is away from a tip by 90 [mm]. A position A is a position that is away from a tip by 175 [mm]. A position B is a position that is away from a tip by 525 [mm]. A position C is a position that is away from a grip end by 175 [mm]. Note that reference character S denotes a golf club shaft in Fig. 4.

According to SG standard CPSA0098, "the C-type golf club shaft is not fractured during a three-point bending test" is accreditation criteria.

The following model is used in Example on the basis of this test.

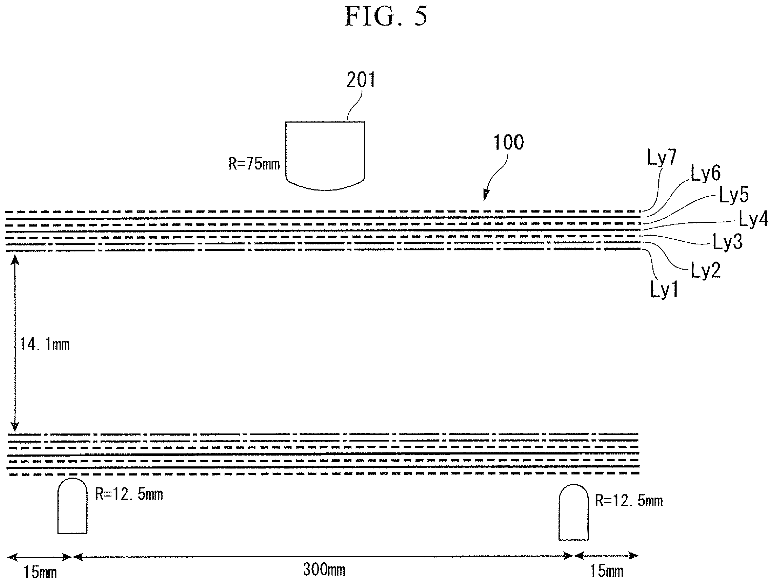

Fig. 5 is a diagram illustrating a model based on a three-point bending test according to Example. As illustrated in Fig. 5, a laminated shell-element model 100 of a golf club shaft has an inner diameter of 14.1 [mm] and a length of 300 [mm], and has a structure in which seven layers formed of fiber-reinforced resin layers, that is, first to seventh layers Ly1 to Ly7 are laminated.

As illustrated in Fig. 5, the positions of three points are a position that is away from one end of the laminated shell-element model by 15 mm, a position that is in the middle of both ends (one end and the other end) of the laminated shell-element model and corresponds to 150 [mm], and a position that is away from the other end of the laminated shell-element model by 15 [mm]. According to SG standard CPSA0098, "R" at the position, which is away from each of one end and the other end by 15 [mm], is 12.5 [mm], and "R" of an loading nose 201 used at the position, which is in the middle of both ends (one end and the other end) and corresponds to 150 [mm], is 75 [mm]. In this model, the loading nose 201 used in the middle is moved down from above at a constant speed.

The structure of the design device 1 is the same as that of Example 1.

The design variable change unit 13 successively changes a design variable that is selected by the design variable selection unit 12. The design variable change unit 13 performs sampling for discretely determining a design variable in the processing for changing the design variable. The sampling performed by the design variable change unit 13 will be described later.

The objective function maximization/minimization unit 15 obtains an optimum point by searching for the maximum value or the minimum value of a objective function. The objective function maximization/minimization unit 15 approximately calculates the objective function and creates a response surface in the processing for searching for the maximum value or the minimum value of the objective function. The creation of the response surface, which is performed by the objective function maximization/minimization unit 15, will be described later.

An example of design processing steps of Example 2 will be described.

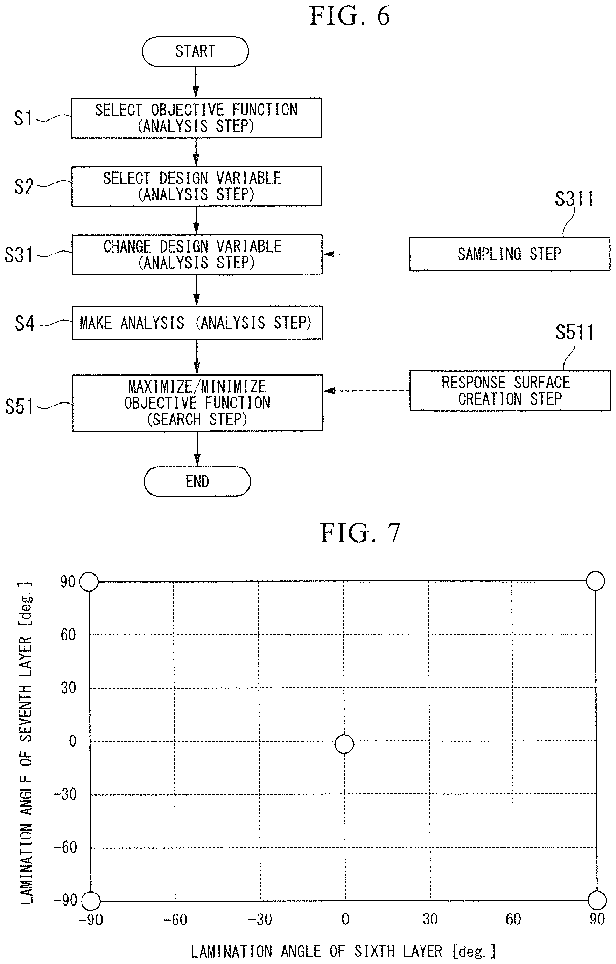

Fig. 6 is a flowchart of design processing according to Example. Note that the same processing as that of Example 1 will be denoted by the same reference numerals and the description thereof will be omitted.

(Step S31) The design variable change unit 13 successively changes a design variable that is selected by the design variable selection unit 12 (a design variable change step and an analysis step). Note that the design variable change unit 13 performs sampling for discretely determining a design variable in Step S31 (Step S311, sampling step).

(Step S51) The objective function maximization/minimization unit 15 obtains an optimum point by searching for the maximum value or the minimum value of a objective function (objective function maximization/minimization step, search step). The objective function maximization/minimization unit 15 approximately calculates the objective function and creates a response surface in Step S51 (Step S511, response surface creation step).

Next, the sampling step of Step S311 will be described.

Fig. 7 is a diagram illustrating the sampling step according to Example. In Fig. 7, a case in which the lamination angles of outermost two layers (the sixth layer Ly6 and the seventh layer Ly7) are to be optimized is considered to simplify description. As described above, two adjacent layers (for example, outermost two layers) are selected in this example among the laminated layers.

In Fig. 7, a horizontal axis represents the lamination angle of the sixth layer and a vertical axis represents the lamination angle of the seventh layer (outermost layer). In a case in which the lamination angle A [°(degree)] of the sixth layer and the lamination angle B [°(degree)] of the seventh layer are denoted in Fig. 7 by (A, B), (-90, -90), (-90, 90), (0, 0), (90, -90), and (90, 90) shown by circle marks are sampling points. Since analysis time required for one time of strength analysis using a laminated shell is long, it is important in practical use that the number of times of analysis is reduced as much as possible. For this reason, it is preferable that sampling can cover the entirety by as few sampling points as possible.

In this embodiment, the sampling of five points using a space-filling method is used as an example of a method that is used in the sampling step.

The space-filling method is a method of filling a space in a balanced manner, and is formed of an algorithm for maximizing "the minimum value of the distance of each point". The design variable change unit 13 uses sampling points, which are subjected to sampling, as changed design variables as described above. Note that the design variable change unit 13 may use methods other than the space-filling method as a sampling method.

Next, a response surface creation step of Step S511 will be described.

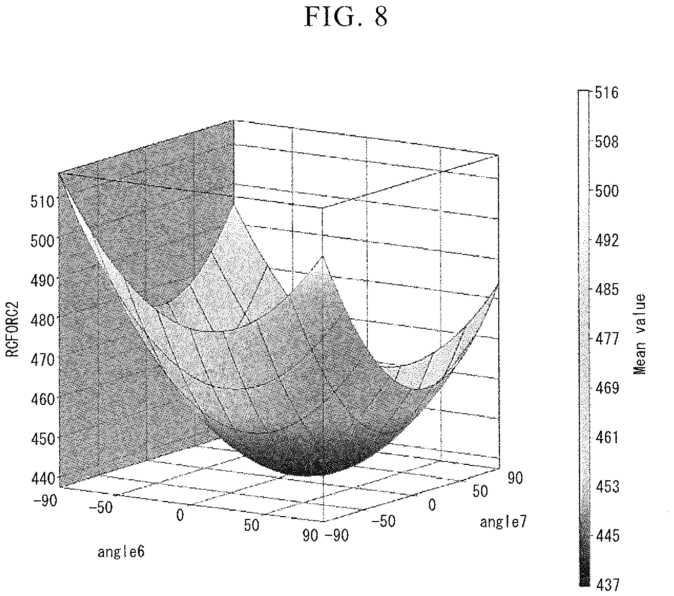

Fig. 8 is a diagram illustrating an example of a response surface based on three-point bending strength that is calculated using the sampling points of the sixth layer and the seventh layer according to Example.

In Fig. 8, a first axis of a horizontal plane represents the lamination angle (angle 6) of the sixth layer, a second axis of the horizontal plane represents the lamination angle (angle 7) of the seventh layer, and a vertical axis represents the magnitude of strength [N]. Note that the lamination angle is in the range of -90° to +90°.

In the example illustrated in Fig. 8, the maximum value is obtained and strength (stiffness) is largest in a case in which the lamination angle of the sixth layer is set to -90° and the lamination angle of the seventh layer is set to -90°.

Here, an example of calculation, which is performed by the design device 1, will be described with reference to Fig. 6.

The objective function selection unit 11 selects three-point bending strength from information that is stored in the storage unit 16 (Step S1). Subsequently, the design variable selection unit 12 selects a lamination angle from the information that is stored in the storage unit 16 (Step S2). Then, the design variable change unit 13 performs sampling about a design variable (Step S311). Subsequently, the design variable change unit 13 uses points, which are subjected to sampling, as, for example, changed lamination angles of outermost two layers (the sixth layer and the seventh layer) (Step S31). Then, the analysis unit 14 makes an analysis with, for example, a finite element method by using a laminated shell element (Step S4). Subsequently, the objective function maximization/minimization unit 15 creates a response surface by using the result of analysis of Step S41 (Step S511). Then, the objective function maximization/minimization unit 15 obtains an optimum point by searching for the maximum value of the objective function while using the created response surface (Step S51).

Example 3

In the response surface illustrated in Fig. 8 of Example 2, the lamination angle A [°(degree)] of the sixth layer and the lamination angle B [°(degree)] of the sixth layer corresponding to a local maximum value are (-90, -90), (-90, 90), (90, -90), and (90, 90). Lamination angle of -90° is the same as the lamination angle of +90° in the tubular body. For this reason, strengths (vertical axis) at four local maximum points should be equal to each other. However, strengths (vertical axis) at four local maximum points are not equal to each other in the example illustrated in Fig. 8.

The reason for this is that periodicity where lamination obtained at a lamination angle of -90° is the same as that obtained at a lamination angle of +90° is not considered in a case in which a method of simply filling a space is used at the time of the sampling step. An example in which this periodicity is considered will be described in Example 3.

A study needs to be made at the time of the sampling step to consider periodicity. A method of periodically and infinitely expanding a sampling space is considered as one method of considering periodicity.

That is, since sampling is doubly performed at a lamination angle close to -90° and +90° in Example 2, the sampling is equivalent to two-point sampling although five-point sampling is performed. Accordingly, double sampling is prevented by the expansion of a sampling space in this example.

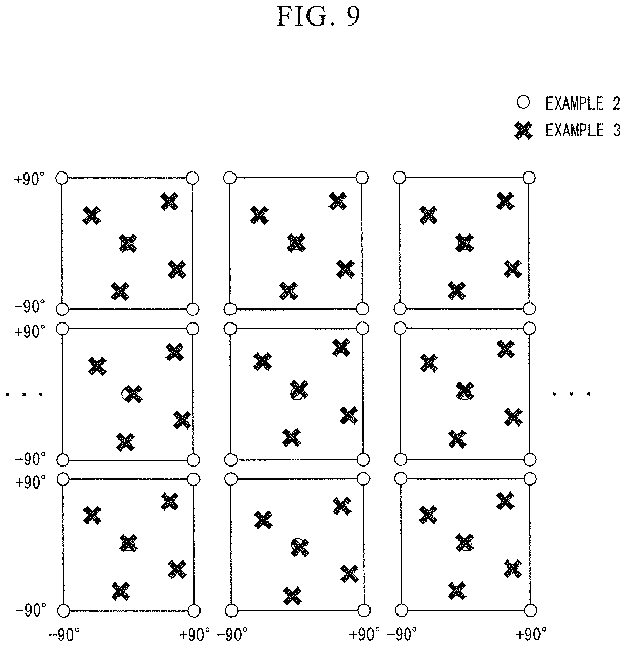

Fig. 9 is a schematic diagram illustrating sampling in the case of five points according to Example. In Fig. 9, circle marks indicate sampling points selected by a sampling method of Example 2, and X marks indicate sampling points selected by a sampling method of Example 3. In Example 3, double sampling is prevented by the expansion of a sampling space as illustrated in Fig. 9.

Next, a space-filling method, which expands a sampling space to consider periodicity, will be described. In a case in which a design variable space of a domain is denoted by v1 and the design variable space v1 is expanded to design variable spaces v2, v3, ..., an infinite design variable space V is generated. When one point $N_1$ is generated in v1, points $N_2$, $N_3$, ... are also generated in the expanded design variable spaces v2, v3, ... likewise. Since the design variable space v1 is expanded to generate an infinite design variable space V, a distance $d_{ij}$ between two points $N_{1i}$ and $N_{1j}$ generated in v1 does not necessarily means a distance in the same design variable space. The minimum distance among distances between points $N_{2j}$, $N_{3j}$, ... and a point $N_{1i}$, which are also generated in another design variable space, serves as a distance between two points. For this reason, the analysis unit 14 obtains sampling points by solving the following expression (1) to uniformly distribute n points in the design variable space V.

[Expression 1]

$$\left.\begin{array}{c} N_1, N_2, \cdots, N_n \in V \\ d_{ij} = \min(N_{1i}N_{1j}, N_{1i}N_{2j} \cdots\cdots) \\ L = f(N_1, N_2, \cdots, N_n) \\ \max(\min(L)) \end{array}\right\} \quad \cdots (1)$$

In Expression (1), i denotes the number of sampling points of each layer and has a value in the range of, for example, 2 to 50. In a case in which the number of sampling points is 2 or more, a highly reliable result can be obtained. In a case in which the number of sampling points is 50 or less, calculation time can be reduced. Further, j denotes the total number of laminated layers and is in the range of, for example, 1 to 15, and an example in which the total number of laminated layers is 7 is described in the embodiment. Further, L denotes a distance between two arbitrary points among a plurality of sampling points. Furthermore, f denotes a function.

The analysis unit 14 obtains new sampling points by max(min(L)) in Expression (1). The meaning of max(min(L)) means that sampling points are scattered over the entire space in a balanced manner by being disposed so that the minimum L becomes maximum.

The sampling points, which are calculated in this way, are illustrated in Fig. 7 or 9. Note that examples in which the number of sampling points is 5 have been illustrated in Figs. 7 and 9, but the number of sampling points is not limited thereto. The number of sampling points may be a predetermined value, and may be capable of being set or changed by a user of the design device 1.

The objective function maximization/minimization unit 15 creates a response surface with, for example, a radial basis function (RBF) by using the calculated sampling points. It is more preferable that the objective function maximization/minimization unit 15 ensures periodicity by using Fourier series approximation to consider periodicity even in the creation of a response surface. The objective function maximization/minimization unit 15 performs Fourier series approximation by using the following expression (2).

[Expression 2]

$$f(x_1 \cdots x_n) = \sum_{m_{x_1}=-\infty}^{\infty} \cdots \sum_{m_{x_n}=-\infty}^{\infty} F_{m_{x_1} \cdots m_{x_n}} e^{\frac{2i\pi}{L}\left(m_{x_1}x_1 + \cdots m_{x_n}x_n\right)} \quad \cdots (2)$$

In Expression (2), n denotes the number of sampling points. n is 5 in the example illustrated in Fig. 7 or 9.

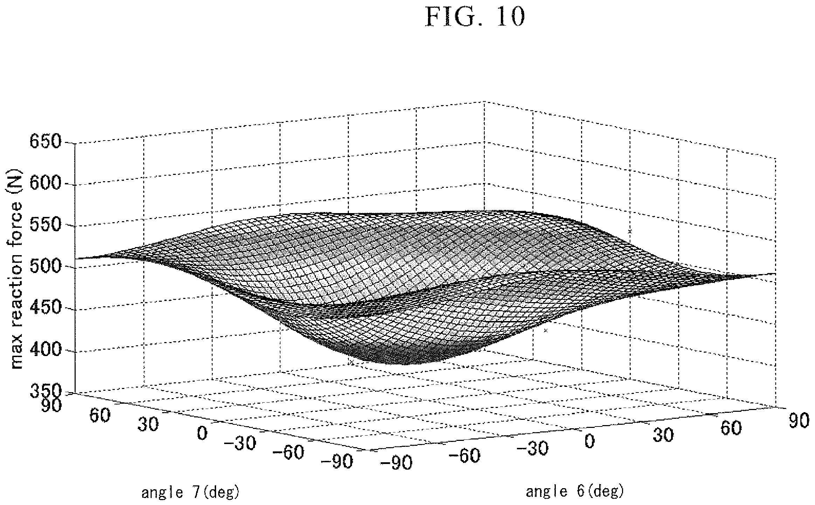

Fig. 10 is a diagram illustrating a response surface that is subjected to primary Fourier series approximation according to Example. Note that an example illustrated in Fig. 10 is an example in which outermost two layers (the sixth layer and the seventh layer) are selected as in Example 2. In Fig. 10, a first axis of a horizontal plane represents the lamination angle (angle 6) of the sixth layer, a second axis of the horizontal plane represents the lamination angle (angle 7) of the seventh layer, and a vertical axis represents the magnitude of strength [N].

Since it is possible to find out the entire solution space by the response surface illustrated in Fig. 10, it is possible to find out an optimum laminated structure for maximizing strength (the lamination angle of each layer since the lamination angle is used as a design variable here).

Example 4

An example in which primary Fourier series approximation is performed to consider periodicity in the creation of a response surface has been described in Example 3. An example in which secondary Fourier series approximation is performed will be described in Example 4.

Since the entire response surface is smoothed in the case of primary approximation, there is a possibility that a local optimum point cannot be found out in a case in which the local optimum point is present. In a case in which primary approximation is changed to secondary approximation, the local optimum point can also be found out.

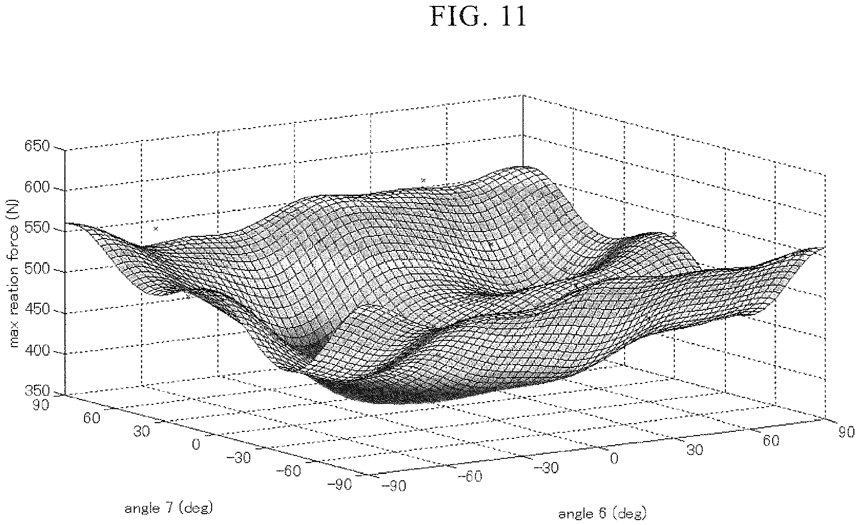

Fig. 11 is a diagram illustrating a response surface that is subjected to secondary Fourier series approximation according to Example. An example illustrated in Fig. 11 is an example in which outermost two layers (the sixth layer and the seventh layer) are selected as in Example 2. In Fig. 11, a first axis of a horizontal plane represents the lamination angle (angle 6) of the sixth layer, a second axis of the horizontal plane represents the lamination angle (angle 7) of the seventh layer, and a vertical axis represents the magnitude of strength [N].

Next, a case in which the total number of laminated layers is 7 will be described.

In Example 4, constraint conditions of the following expression (3) are used for the above-mentioned position C.
[Expression 3]

$$EI = \sum_{i=1}^{7} E(a_i)_{xx} I_{a_i}$$
$$GJ = \sum_{i=1}^{7} E(a_i)_{ss} J_{a_i}$$
$$35[N \cdot m^2] \leq EI = f(\theta_1, \theta_2 \cdots, \theta_7)$$
$$12[N \cdot m^2] \leq GJ = g(\theta_1, \theta_2 \cdots, \theta_7)$$

$\cdots (3)$

In Expression (3), EI denotes the bending stiffness of a golf club shaft, E denotes Young's modulus, and I denotes the second moment of area of a golf club shaft. GJ denotes the torsional stiffness of a golf club shaft, G denotes the shear modulus of elasticity, and J denotes a torsion constant (torsional moment of area). Further, i denoting the order of a layer, is 1 in the case of the first layer, and is 7 in the case of the seventh layer. Furthermore, in regard to $E(a_i)_{xx}$, $E(a_1)xx$ denotes the Young's modulus of the innermost layer Ly1, $E(a_2)xx$ denotes the Young's modulus of the second layer Ly2 that is the second from the innermost side, .... In regard to $Ia_i$, $Ia_1$ denotes the second moment of area of the innermost layer Ly1, $Ia_2$ denotes the second moment of area of the second layer Ly2 that is the second from the innermost side, .... In regard to $E(a_i)_{ss}$, $E(a_1)_{ss}$ denotes the shear modulus of elasticity of the innermost layer Ly1, $E(a_2)_{xx}$ denotes the shear modulus of elasticity of the second layer Ly2 that is the second from the innermost side, .... In regard to $Ja_i$, $Ja_1$ denotes the torsion constant of the innermost layer Ly1, $Ja_2$ denotes the torsion constant of the second layer Ly2 that is the second from the innermost side, .... Further, each of f and g denotes a function. Furthermore, $\theta_1$ denotes the lamination angle of the first layer, $\theta_2$ denotes the lamination angle of the second layer, ..., and $\theta_7$ denotes the lamination angle of the seventh layer.

Note that EI is set to 35 [N·m²] or more in consideration of a constraint condition where a golf club shaft has a hardness for allowing the golf club shaft to function as a golf club shaft. GJ is set to 12 [N·m²] or more in consideration of a constraint condition where a golf club shaft has torsion resisntance for allowing the golf club shaft to function as a golf club shaft.

An example of an optimum structure at the position C in a case in which constraint conditions shown in Expression (3) are imposed will be described.

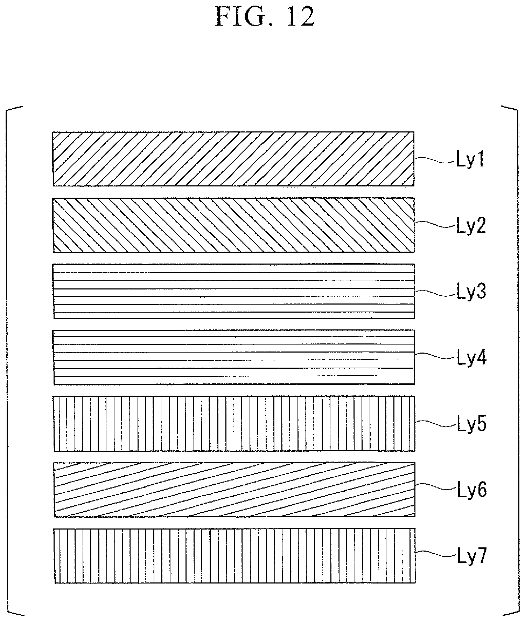

Fig. 12 is a diagram illustrating an example of an optimum structure at the position C in a case in which constraint conditions according to Example are imposed.

As illustrated in Fig. 12, in the order to the innermost layer from the outermost layer, the lamination angle of the seventh layer Ly7 is 90°, the lamination angle of the sixth layer Ly6 is 15° (a calculation result of the lamination angle is 14.18° but the lamination angle is set to 15°), the lamination angle of the fifth layer Ly5 is 90°, the lamination angle of the fourth layer Ly4 is 0°, the lamination angle of the third layer Ly3 is 0°, the lamination angle of the second layer Ly1 is -45°, and the lamination angle of the first layer Ly1 is 45°.

Note that the structure illustrated in Fig. 12 is an example of a structure of which the strength is maximum and the weight is minimum.

Likewise, a laminated structure in which constraint conditions of the following expression (4) are imposed on the position B, constraint conditions of the following expression (5) are imposed on the position A, and constraint conditions of the following expression (6) are imposed on the position T is calculated. Since performances, which are required at the respective positions B, A, and T, are different from each other, inner diameters at the respective positions are set to 13.0 [mm], 9.8 [mm], and 8.4 [mm]. The inner diameter at the above-mentioned position C is set to 14.1 [mm].
[Expression 4]

$$20[N \cdot m^2] \leq EI = f(\theta_1, \theta_2 \cdots, \theta_7)$$
$$12[N \cdot m^2] \leq GJ = g(\theta_1, \theta_2 \cdots, \theta_7)$$

$\cdots (4)$

[Expression 5]

$$10\left[N\cdot m^2\right]\le EI=f(\theta_1,\theta_2\cdots,\theta_7)\left.\right\} \\ 6\left[N\cdot m^2\right]\le GJ=g(\theta_1,\theta_2\cdots,\theta_7)\left.\right\} \quad\cdots (5)$$

[Expression 6]

$$10\left[N\cdot m^2\right]\le EI=f(\theta_1,\theta_2\cdots,\theta_7)\left.\right\} \\ 5\left[N\cdot m^2\right]\le GJ=g(\theta_1,\theta_2\cdots,\theta_7)\left.\right\} \quad\cdots (6)$$

The values of the respective expressions (4) to (6) are values that are set in consideration of a constraint condition where EI corresponds to the inner diameter of a golf club shaft having a hardness for allowing the golf club shaft to function as a golf club shaft and a constraint condition where GJ corresponds to the inner diameter of a golf club shaft having torsion resistance for allowing the golf club shaft to function as a golf club shaft.

Example of optimum structures at the positions C, B, A, and T in a case in which constraint conditions shown in Expressions (3) to (6) are imposed will be described.

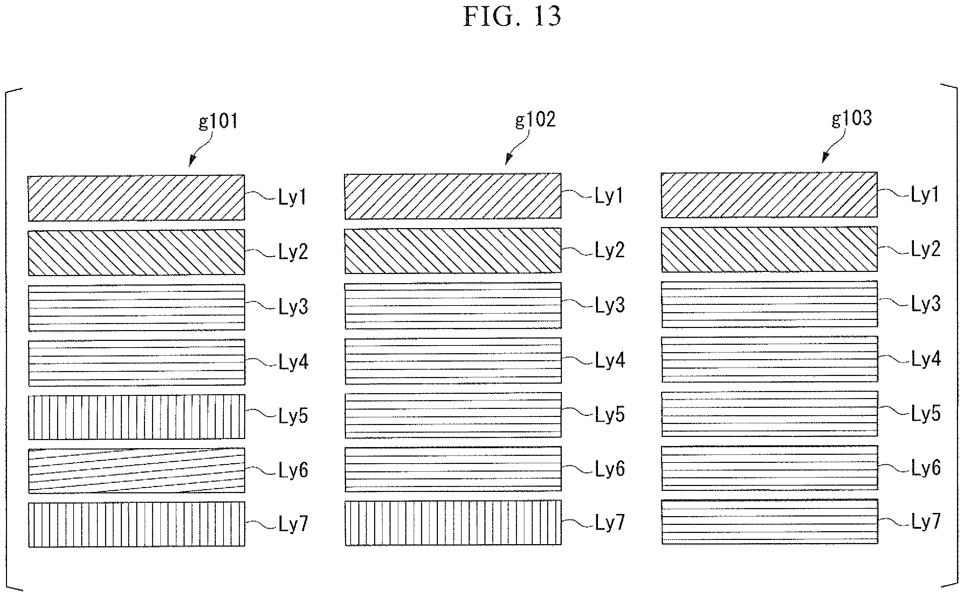

Fig. 13 is a diagram illustrating examples of optimum structures at the positions B, A, and T in a case in which constraint conditions according to Example are imposed.

As illustrated in a region denoted by reference numeral g101 of Fig. 13, at the position B, in the order to the innermost layer from the outermost layer, the lamination angle of the seventh layer Ly7 is 90°, the lamination angle of the sixth layer Ly6 is 5°, the lamination angle of the fifth layer Ly5 is 90°, the lamination angle of the fourth layer Ly4 is 0°, the lamination angle of the third layer Ly3 is 0°, the lamination angle of the second layer Ly1 is -45°, and the lamination angle of the first layer Ly1 is 45°.

As illustrated in a region denoted by reference numeral g102 of Fig. 13, at the position A, in the order to the innermost layer from the outermost layer, the lamination angle of the seventh layer Ly7 is 90°, the lamination angle of the sixth layer Ly6 is 0°, the lamination angle of the fifth layer Ly5 is 0°, the lamination angle of the fourth layer Ly4 is 0°, the lamination angle of the third layer Ly3 is 0°, the lamination angle of the second layer Ly1 is -45°, and the lamination angle of the first layer Ly1 is 45°.

As illustrated in a region denoted by reference numeral g103 of Fig. 13, at the position T, in the order to the innermost layer from the outermost layer, the lamination angle of the seventh layer Ly7 is 0°, the lamination angle of the sixth layer Ly6 is 0°, the lamination angle of the fifth layer Ly5 is 0°, the lamination angle of the fourth layer Ly4 is 0°, the lamination angle of the third layer Ly3 is 0°, the lamination angle of the second layer Ly1 is -45°, and the lamination angle of the first layer Ly1 is 45°.

Table 2 shows results of evaluation of the strengths of optimum lamination of Comparative example and Example at the respective positions. Table 2 shows the results of strengths of structures measured at the respective positions in a case in which the structures, which are obtained from calculation, are actually manufactured. According to Example, it is confirmed as described above that the strength of the structure of Example is improved in comparison with the strength of the structure of Comparative example even though the structures of Comparative example and Example have the same weight.

[Table 2]

|  | Strength at position C [N] | Strength at position B [N] | Strength at position A [N] | Strength at position T [N] | Weight [g] |
|---|---|---|---|---|---|
| Comparative Example | 432 | 414 | 428 | 860 | 29.5 |
| Example | 470 | 456 | 446 | 952 | 29.5 |

Note that in the calculation results illustrated in Figs. 12 and 13, the layers Ly6, which are the second layers from the outside at the positions C and B, are 15° and 5°, respectively. In a case in which the design values are applied to a golf club shaft, there is a possibility that a rule may be violated. The reason for this is that there is a rule of "effectively prohibiting a golf club shaft from being designed so that a golf club shaft has asymmetric characteristics", that is, "prohibiting forming a golf club shaft in an asymmetric shape on purpose" (for example, a rule guide about a club and a ball, 2016 (fifth edition), Japan Golf Association). Accordingly, it is preferable that the prepreg C (Table 1) of which the thickness is substantially equal to a half of the thickness of the prepreg is used as a material to form layers having lamination angles of ±15° and ±5°. Further, the weight of the golf club shaft of Comparative example is the same as the weight of the golf club shaft having an optimum lamination, and the stiffness of the golf club shaft of Comparative example is higher than the stiffness of the golf club shaft having an optimum lamination. In this case, it is found that the golf club shaft having smaller stiffness is more advantageous in terms of strength.

The evaluation of stiffness is performed through a cantilever bending test using a weight of 1 [kg]. The cantilever bending test of a golf club shaft is based on, for example, the above-mentioned SG standard CPSA0098, and the details thereof will be omitted.

<Example of Golf club shaft>

Here, an example of the optimum lamination of a golf club shaft of which the strength is maximized will be described. In regard to design conditions, the inner diameter of the golf club shaft at the position C is 14.1 [mm], the inner diameter of the golf club shaft at the position B is 13.0 [mm], the inner diameter of the golf club shaft at the position A is 9.8 [mm], and the inner diameter of the golf club shaft at the position T is 8.4 [mm].

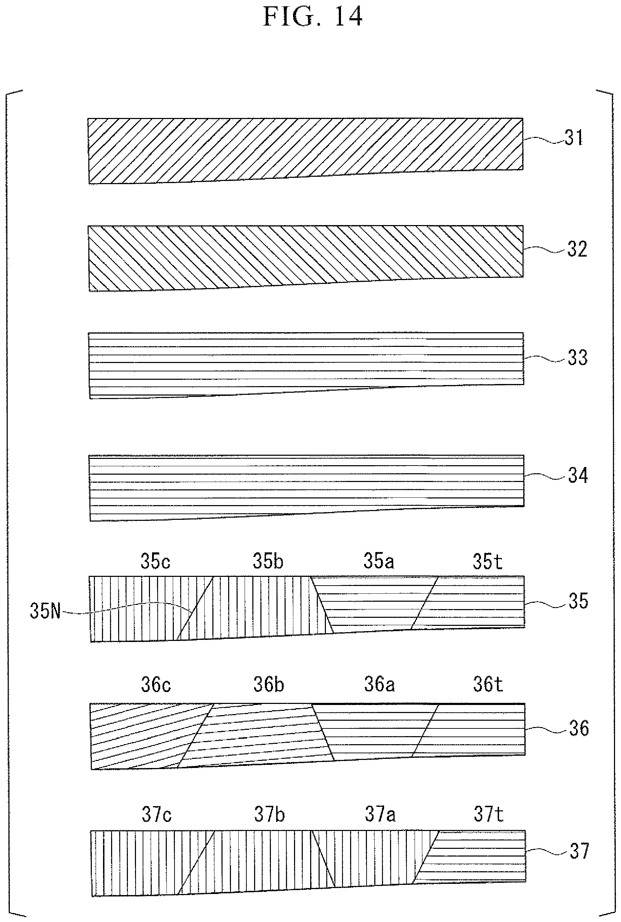

Fig. 14 is a diagram illustrating an example of the structure of an optimum lamination of a golf club shaft of which the strength is maximized.

The respective prepregs are wound on a core bar, which is called a mandrel, the mandrel is drawn out after the respective prepregs are heated and cured, and the outer layer of the prepregs is polished, so that the golf club shaft of this embodiment is obtained. This is the same as a method of manufacturing a general golf club shaft. Note that polishing allowance is not illustrated in Fig. 14. Further, an outer diameter-adjustment layer is present on a tip portion (a portion close to the position T), but is not illustrated in Fig. 14. Furthermore, a portion close to the position C is a bat portion. As a result of calculation, all materials used for the respective layers are the prepreg E (Table 1).

The lamination angle of an angle layer 31, which is the innermost layer, at each of the positions C, B, A, and T is +45°.

The lamination angle of an angle layer 32 at each of the positions C, B, A, and T is -45°, and the angle layer 32 is laminated on the angle layer 31.

The lamination angle of a straight layer 33 at each of the positions C, B, A, and T is 0°, and the straight layer 33 is laminated on the angle layer 32.

The lamination angle of a straight layer 34 at each of the positions C, B, A, and T is 0°, and the straight layer 34 is laminated on the straight layer 33.

The lamination angle of a change layer 35c is +90° and the change layer 35c is laminated at the position C on the straight layer 34.

The lamination angle of a change layer 36c is +15°, and the change layer 36c is laminated on the change layer 35c.

The lamination angle of a change layer 37c is +90°, and the change layer 37c is laminated on the change layer 36c.

The lamination angle of a change layer 35b is +90°, and the change layer 35b is laminated at the position B on the straight layer 34.

The lamination angle of a change layer 36b is 5°, and the change layer 36b is laminated on the change layer 35b.

The lamination angle of a change layer 37b is +90°, and the change layer 37b is laminated on the change layer 36b.

The lamination angle of a change layer 35a is 0°, and the change layer 35a is laminated at the position A on the straight layer 34.

The lamination angle of a change layer 36a is 0°, and the change layer 36a is laminated on the change layer 35a.

The lamination angle of a change layer 37a is +90°, and the change layer 37a is laminated on the change layer 36a.

The lamination angle of a change layer 35t is 0°, and the change layer 35t is laminated at the position A on the straight layer 34.

The lamination angle of a change layer 36t is 0°, and the change layer 36t is laminated on the change layer 35t.

The lamination angle of a change layer 37t is 0°, and the change layer 37t is laminated on the change layer 36t.

Note that each layer may be wound on the other adjacent layer.

Note that it is preferable that each of the change layer 35c, the change layer 35b, the change layer 35a, the change layer 35t, the change layer 36c, the change layer 36b, the change layer 36a, the change layer 36t, the change layer 37c, the change layer 37b, the change layer 37a, and the change layer 37t is formed so that the end portions of the respective change layers are in contact with each other, that is, are disposed without a gap therebetween and without overlapping each other. However, each change layer may be wound alone. Here, portions, which are typified by the change layers 35c and 35b of Fig. 14 and are in oblique contact with each other, are release portions for avoiding stress concentration. Note that the portions, which are to be in contact with each other, may be disposed with, for example, an interval, which is unavoidable in manufacturing, therebetween as long as not overlapping each other.

Each of the change layer 35c, the change layer 36c, and the change layer 37c is disposed in the range of 0 to 325 mm from an end portion of a bat as a starting point (hereinafter, this range is called the vicinity of the position C). Here, the datum of length is the middle of the release portion. Each of the change layer 35b, the change layer 36b, and the change layer 37b is disposed in the range of 325 to 625 mm (hereinafter, this range is called the vicinity of the position B). Further, each of the change layer 35a, the change layer 36a, and the change layer 37a is disposed in the range of 625 to 975 mm (hereinafter, this range is called the vicinity of the position A). Each of the change layer 35t, the change layer 36t, and the change layer 37t is disposed in a range between 975 mm and the tip (hereinafter, this range is called the vicinity of the position T).

The above-mentioned structure has the following characteristics I to VI.

I. A vertical laminated component is successively reduced from the bat side toward the tip side.

Here, the vertical laminated component is defined as the sum of the lamination angles of the respective layers except for the two angle layers of the innermost layers. Note that the angle layer means a layer of which the orientation of fiber with respect to the longitudinal direction of a golf club shaft is in the range of +20° to +75° and -20° to -75°. Further, the vertical laminated component is an absolute value, and is a non-dimensional parameter.

In a case in which a vertical laminated component in the vicinity of the position C, a vertical laminated component in the vicinity of the position B, a vertical laminated component in the vicinity of the position A, and a vertical laminated component in the vicinity of the position T are to be calculated, the sum of the vertical laminated components of the respective layers in each region is divided by the number of prepregs of the respective layers and obtained vertical laminated components of the respective layers are then added over all layers. As a result, the vertical laminated components in respective regions are obtained. For example, in a case in which a 0°-layer and a 15°-layer are compared to each other, the vertical laminated component of the 0°-layer is 0 and the vertical laminated component of the 15°-layer is 15. Accordingly, the vertical laminated component of the 15°-layer is larger than the vertical laminated component of the 0°-layer. Further, in a case in which the number of layers laminated in the vicinity of the position C is 3, a first layer is one 90°-layer, a second layer is formed of two layers, a 45°-layer and a 15°-layer that are in contact with each other, and a third layer is formed of two 90°-layers that are in contact with each other, a vertical laminated component is obtained from "90/1+(45+15)/2+(90+90)/2=210".

II. At least one layer is formed of a plurality of prepregs having changed lamination angles. The layer formed of the plurality of prepregs may be a layer extending over the entire length, and may be a partially disposed layer.

III. In the vicinity of the position C, lamination angles are +45°, -45°, 0°, 0°, 90°, 15° to 45°, and 90° in this order from the inside. A vertical laminated component is in the range of 195 to 225. Since stiffness is high in the vicinity of the position C, a portion positioned in the vicinity of the position C is crushed and fractured while a warp caused by bending is small in the vicinity of the position C. That is, crush stiffness becomes dominant. In a case in which a vertical laminated component, which is obtained from the pseudo and relative digitization of crush stiffness, is 195 or more, crush stiffness is increased. For this reason, it is preferable that a vertical laminated component is 195 or more. In a case in which a vertical laminated component is 225 or less, bending stiffness is sufficient. For this reason, it is preferable that a vertical laminated component is 225 or less.

IV. In the vicinity of the position B, lamination angles are +45°, -45°, 0°, 0°, 90°, 5° to 15°, and 90° in this order from the inside. A vertical laminated component is in the range of 185 to 195, and is smaller than a vertical laminated component obtained at the position C. Since a portion in the vicinity of the position B is thinner and softer than a portion in the vicinity of the position C, a bending component in the vicinity of the position B is larger than that in the vicinity of the position C at the time of fracture. In a case in which a vertical laminated component is set in the above-mentioned range smaller than a vertical laminated component in the vicinity of the position C, bending stiffness can be increased.

V. In the vicinity of the position A, lamination angles are +45°, -45°, 0°, 0°, 0°, 0°, and 90° in this order from the inside. A vertical laminated component is 90. A vertical laminated component is smaller than a vertical laminated component obtained at the position B. In a case in which a vertical laminated component obtained at the position A is too large, there is a high possibility that stiffness is insufficient. For this reason, it is preferable that a vertical laminated component is less than 180. Since a portion in the vicinity of the position A is thinner and softer than a portion in the vicinity of the position B, a bending component in the vicinity of the position A is larger than that in the vicinity of the position B at the time of fracture. For this reason, in order to increase bending stiffness, it is preferable that a vertical laminated component is set in the above-mentioned range smaller than a vertical laminated component in the vicinity of the position B.

VI. In the vicinity of the position T, lamination angles are +45°, -45°, 0°, 0°, 0°, 0°, and 0° in this order from the inside.

A vertical laminated component is 0. Since fracture is mainly caused by bending in the vicinity of the position T, it is preferable that a vertical laminated component is 0.

Since bending stiffness is higher at a portion closer to a bat in the above-mentioned characteristics, bending deformation hardly occur and the laminated structure depends on crushing fracture in a case in which three-point bending is performed. That is, a cylindrical golf club shaft is deformed into an oval shape and is fractured. For this reason, the conclusion that many 90°-layers for increasing crush stiffness should be disposed is obtained.

On the other hand, since bending stiffness is low at a portion close to a tip, bending deformation significantly occurs and crushing deformation hardly occurs in a case in which three-point bending is performed. Accordingly, the conclusion that many 0°-layers for increasing bending stiffness should be disposed is obtained.

A golf club shaft having the above-mentioned structure (Fig. 14) is obtained as described above by the designing method of this embodiment. Here, the number of layers is 7 and each layer is formed of the prepreg E. However, in a case in which the above-mentioned characteristics are satisfied, strength can be increased likewise. Each change layer can also be adjusted likewise. The weight of the golf club shaft, which is designed by the design device 1, is about 30 [g] or less (actually, 29.5 [g]). Stiffness is designed so that the golf club shaft is bent by 90 [mm] or more in a cantilever bending test using a weight of 1 [kg]. The actual measured value in the cantilever bending test is 91 [mm].

According to the embodiment, a design variable (for example, a material) where a objective function (for example, stiffness) to be designed becomes maximum or minimum can be obtained as described above.

Further, according to the embodiment, a design variable (for example, a lamination angle) where a objective function (for example, three-point bending strength) to be designed becomes maximum or minimum can be obtained for each layer.

Furthermore, according to the embodiment, since a sampling step using a space-filling method or the like is performed, sampling can cover the entirety by a small number of sampling points. Accordingly, since sampling can cover the entirety by as few sampling points as possible, analysis time can be reduced.

Further, according to the embodiment, a sampling space is expanded in the sampling step using Fourier series approximation. Accordingly, double sampling can be prevented.

Furthermore, according to the embodiment, in a case in which Fourier series approximation is primary in the sampling step, it is possible to find out the entire solution space. Accordingly, it is possible to find out an optimum laminated structure for maximizing strength (the lamination angle of each layer since the lamination angle is used as a design variable here). Moreover, in a case in which Fourier series approximation is secondary, the local optimum point can also be found out.

Further, according to the embodiment, at least one layer among laminated layers includes a plurality of regions (for example, the vicinity of the position C, the vicinity of the position B, the vicinity of the position A, and the vicinity of the position T). Accordingly, design variables where objective functions to be designed for each layer and each region become maximum or minimum can be obtained. Accordingly, according to the embodiment, it is confirmed as described above that the strength of the structure of Example is improved in comparison with the strength of the structure of Comparative example even though, for example, the structures of Comparative example and Example have the same weight.

INDUSTRIAL APPLICABILITY

The invention can be applied to reduce weight and increase strength, and can solve the problems peculiar to a tubular body formed of a plurality of fiber-reinforced resin layers.

EXPLANATIONS OF LETTERS OR NUMERALS

1 DESIGN DEVICE
11 OBJECTIVE FUNCTION SELECTION UNIT
12 DESIGN VARIABLE SELECTION UNIT
13 DESIGN VARIABLE CHANGE UNIT
14 ANALYSIS UNIT
15 OBJECTIVE FUNCTION MAXIMIZATION/MINIMIZATION UNIT
16 STORAGE UNIT
S1 OBJECTIVE FUNCTION SELECTION STEP (ANALYSIS STEP)
S2 DESIGN VARIABLE SELECTION STEP (ANALYSIS STEP)
S3, S31 DESIGN VARIABLE SELECTION STEP (ANALYSIS STEP)

S4 ANALYSIS STEP
S5, S51 OBJECTIVE FUNCTION MAXIMIZATION/MINIMIZATION STEP (SEARCH STEP)
S311 SAMPLING STEP
S511 RESPONSE SURFACE CREATION STEP
31, 32 ANGLE LAYER
33, 34 STRAIGHT LAYER
35, 36, 37, 35a, 36a, 37a, 35b, 36b, 37b, 35c, 36c, 37c, 35t, 36t, 37tCHANGE LAYER

**Claims**

1. A tubular body designing method comprising:

   an analysis step of calculating a plurality of objective functions of a tubular body, which is to be formed of a plurality of fiber-reinforced resin layers laminated together, by repeatedly performing calculation according to a discrete method using a lamination model while successively changing a value of a design variable of the tubular body; and
   a search step of searching for a value of the design variable where a maximum value or a minimum value is obtained from the calculated plurality of objective functions.

2. The tubular body designing method according to claim 1,
   wherein the objective functions are formed of a plurality of variables.

3. The tubular body designing method according to claim 1 or 2,
   wherein the discrete method is at least one of a finite element method, a boundary element method, a distinct element method, an element-free Galerkin (EFG) method, an extended FEM (XFEM) method, a smoothed particle hydrodynamics (SPH) method, and a capsular particle method,
   the objective function is any one of strength, weight, bending stiffness, and torsional stiffness of the tubular body or is represented by a plurality of linear combinations, and
   the search step selects at least one of a lamination angle of each laminated layer, a material constant, and a pipe shape of the tubular body as the design variable.

4. The tubular body designing method according to any one of claims 1 to 3,
   wherein at least one of the plurality of laminated layers of the tubular body includes two or more regions,
   the analysis step calculates the plurality of objective functions for each region of the layer, and
   the search step searches for a value of the design variable for each region of the layer.

5. The tubular body designing method according to any one of claims 1 to 4,
   wherein the analysis step further includes a sampling step of discretely selecting the lamination angles of the layers that are the design variables,
   the analysis step calculates the plurality of objective functions, using the lamination angles of the layers, selected by the sampling step as the successively changed design variables,
   the search step includes a response surface creation step of creating a response surface that is calculated so as to be approximated to the plurality of objective functions calculated by the analysis step, and
   the search step searches for a value of the design variable, which allows the objective function to take a maximum value or a minimum value in the response surface created by the response surface creation step.

6. The tubular body designing method according to claim 5,
   wherein a sampling space is expanded to an infinite space with periodicity, and the sampling step performs sampling for maximizing a minimum value of a distance between sampling points in the infinite space.

7. The tubular body designing method according to claim 5 or 6,
   wherein the response surface creation step creates the response surface by Fourier series approximation.

8. The tubular body designing method according to claim 7,
   wherein the Fourier series approximation is primary approximation or secondary approximation.

9. A golf club shaft designing method in which the tubular body is a golf club shaft and the golf club shaft is designed by the tubular body designing method according to any one of claims 1 to 8.

10. A golf club shaft in which a vertical laminated component, which is the sum of lamination angles of the respective layers except for two angle layers of the innermost layers, is reduced toward a tip side from a bat side.

11. The golf club shaft according to claim 10,
which is formed of plurality of layers of prepreg,
wherein lamination angle of at least one layer is different from other layers.

12. The golf club shaft according to claim 10 or 11,
wherein in a case in which an bat end part as a datum, and a range of 0 mm or more and less than 325 mm is defined as the vicinity of a position C, a range of 325 mm or more and less than 625 mm is defined as the vicinity of a position B, a range of 625 mm or more and 975 mm or less is defined as the vicinity of a position A, and a range between from 975 mm to a tip end part is defined as the vicinity of a position T, 1) to 4) are satisfied,

1) A vertical laminated component in the vicinity of the position C is 195 or more and smaller than 225,
2) A vertical laminated component in the vicinity of the position B is 185 or more and is smaller than the vertical laminated component obtained at the point C,
3) A vertical laminated component in the vicinity of the position A is 90 or more and smaller than 180, and
4) A vertical laminated component in the vicinity of the position T is 0.

13. The golf club shaft according to any one of claims 10 to 12,
wherein lamination angles in the vicinity of the position C are +45°, -45°, 0°, 0°, 90°, 15° to 45°, and 90° in this order from the inside of the tubular body,
lamination angles in the vicinity of the position B are +45°, -45°, 0°, 0°, 90°, 5° to 15°, and 90° in this order from the inside of the tubular body,
lamination angles in the vicinity of the position A are +45°, -45°, 0°, 0°, 0°, 0°, and 90° in this order from the inside of the tubular body, and
lamination angles in the vicinity of the position T are +45°, -45°, 0°, 0°, 0°, 0°, and 0° in this order from the inside of the tubular body.

14. The golf club shaft according to any one of claim 10 or 11,
wherein lamination angles in the vicinity of the position C are +45°, -45°, 0°, 0°, 90°, +15° to 45°, -15° to -45°, and 90° in this order from the inside of the tubular body,
lamination angles in the vicinity of the position B are +45°, -45°, 0°, 0°, 90°, -5° to -15°, +5° to +15°, and 90° in this order from the inside of the tubular body,
lamination angles in the vicinity of the position A are +45°, -45°, 0°, 0°, 0°, 0°, and 90° in this order from the inside of the tubular body, and
lamination angles in the vicinity of the position T are +45°, -45°, 0°, 0°, 0°, 0°, and 0° in this order from the inside of the tubular body.

# FIG. 1

1

DESIGN DEVICE

INPUT →

| OBJECTIVE FUNCTION | ~11 |

| DESIGN VARIABLE SELECTION UNIT | ~12 |

| DESIGN VARIABLE CHANGE UNIT | ~13 |

| ANALYSIS UNIT | ~14 |

| OBJECTIVE FUNCTION MAXIMIZATION/MINIMIZATION UNIT | ~15 |

| STORAGE UNIT | ~16 |

→ OUTPUT

# FIG. 2

```
        ┌─────────────┐
        │    START    │
        └─────────────┘
               │
               ▼
┌───────────────────────────┐
│ SELECT OBJECTIVE FUNCTION  │ ─── S1
│     (ANALYSIS STEP)        │
└───────────────────────────┘
               │
               ▼
┌───────────────────────────┐
│   SELECT DESIGN VARIABLE   │ ─── S2
│     (ANALYSIS STEP)        │
└───────────────────────────┘
               │
               ▼
┌───────────────────────────┐
│   CHANGE DESIGN VARIABLE   │ ─── S3
│     (ANALYSIS STEP)        │
└───────────────────────────┘
               │
               ▼
┌───────────────────────────┐
│       MAKE ANALYSIS        │ ─── S4
│     (ANALYSIS STEP)        │
└───────────────────────────┘
               │
               ▼
┌───────────────────────────┐
│     MAXIMIZE/MINIMIZE      │ ─── S5
│    OBJECTIVE FUNCTION      │
│      (SEARCH STEP)         │
└───────────────────────────┘
               │
               ▼
        ┌─────────────┐
        │     END     │
        └─────────────┘
```

FIG. 3

EP 3 456 524 A1

FIG. 4

EP 3 456 524 A1

# FIG. 5

# FIG. 6

```
                    ┌──────────────┐
                    │    START     │
                    └──────┬───────┘
                           │
                           ▼
      ┌─────────────────────────────────────┐
  S1  │  SELECT OBJECTIVE FUNCTION           │
      │       (ANALYSIS STEP)                │
      └──────────────────┬──────────────────┘
                         │
                         ▼
      ┌─────────────────────────────────────┐
  S2  │    SELECT DESIGN VARIABLE            │
      │       (ANALYSIS STEP)                │
      └──────────────────┬──────────────────┘
                         │
                         ▼                                            S311
      ┌─────────────────────────────────────┐      ┌──────────────────────────┐
  S31 │    CHANGE DESIGN VARIABLE           │◄─ ─ ─│     SAMPLING STEP         │
      │       (ANALYSIS STEP)                │      └──────────────────────────┘
      └──────────────────┬──────────────────┘
                         │
                         ▼
  S4  ┌─────────────────────────────────────┐
      │  MAKE ANALYSIS (ANALYSIS STEP)       │
      └──────────────────┬──────────────────┘
                         │
                         ▼                                            S511
      ┌─────────────────────────────────────┐      ┌──────────────────────────┐
  S51 │       MAXIMIZE/MINIMIZE              │◄─ ─ ─│    RESPONSE SURFACE       │
      │      OBJECTIVE FUNCTION              │      │    CREATION STEP          │
      │        (SEARCH STEP)                 │      └──────────────────────────┘
      └──────────────────┬──────────────────┘
                         │
                         ▼
                    ┌──────────────┐
                    │     END      │
                    └──────────────┘
```

# FIG. 7

LAMINATION ANGLE OF SIXTH LAYER [deg.]

# FIG. 8

FIG. 9

FIG. 10

EP 3 456 524 A1

FIG. 11

EP 3 456 524 A1

# FIG. 12

FIG. 13

EP 3 456 524 A1

# FIG. 14

## INTERNATIONAL SEARCH REPORT

| International application No. |
| --- |
| PCT/JP2017/018087 |

**A. CLASSIFICATION OF SUBJECT MATTER**

*B29C70/10*(2006.01)i, *A63B53/10*(2015.01)i, *B32B1/08*(2006.01)i, *G06F17/50* (2006.01)i

According to International Patent Classification (IPC) or to both national classification and IPC

**B. FIELDS SEARCHED**

Minimum documentation searched (classification system followed by classification symbols)
B29C70/10, A63B53/10, B32B1/08, G06F17/50

Documentation searched other than minimum documentation to the extent that such documents are included in the fields searched
Jitsuyo Shinan Koho 1922-1996 Jitsuyo Shinan Toroku Koho 1996-2017
Kokai Jitsuyo Shinan Koho 1971-2017 Toroku Jitsuyo Shinan Koho 1994-2017

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X<br>A | JP 2010-240209 A (Sumitomo Rubber Industries, Ltd.),<br>28 October 2010 (28.10.2010),<br>claims; paragraphs [0019] to [0025], [0034], [0051]<br>(Family: none) | 1-9<br>10-14 |
| X<br>A | JP 2004-8521 A (The Yokohama Rubber Co., Ltd.),<br>15 January 2004 (15.01.2004),<br>claims; paragraphs [0001] to [0003], [0021], [0034], [0040], [0046]<br>(Family: none) | 1-3,5-9<br>4,10-14 |
| A | JP 2008-302017 A (SRI Sports Ltd.),<br>18 December 2008 (18.12.2008),<br>entire text<br>(Family: none) | 1-14 |

☐ Further documents are listed in the continuation of Box C.    ☐ See patent family annex.

| | |
| --- | --- |
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |
| Date of the actual completion of the international search<br>30 June 2017 (30.06.17) | Date of mailing of the international search report<br>11 July 2017 (11.07.17) |
| Name and mailing address of the ISA/<br>Japan Patent Office<br>3-4-3,Kasumigaseki,Chiyoda-ku,<br>Tokyo 100-8915,Japan | Authorized officer<br><br>Telephone No. |

Form PCT/ISA/210 (second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2016097268 A
- JP 2008302017 A
- JP 2011000425 A
- WO 2013042600 A
- JP 2003094559 A